Europäisches Patentamt

European Patent Office

Office européen des brevets

(11) Publication number: **0 029 867**
**B1**

(12) # EUROPEAN PATENT SPECIFICATION

(45) Date of publication of patent specification: **01.12.82**

(51) Int. Cl.³: **C 01 B 31/22, F 25 J 1/00**

(21) Application number: **79302712.9**

(22) Date of filing: **28.11.79**

(54) Apparatus for producing dry ice from liquid carbon dioxide.

(43) Date of publication of application:
**10.06.81 Bulletin 81/23**

(45) Publication of the grant of the patent:
**01.12.82 Bulletin 82/48**

(84) Designated Contracting States:
**DE FR GB IT**

(56) References cited:
**DE - B - 1 235 870**
**FR - A - 672 767**
**GB - A - 433 018**
**US - A - 1 643 590**
**US - A - 3 070 967**

(73) Proprietor: **IWATANI SANGYO KABUSHIKI KAISHA**
**1,4 Hommachi Higashiku**
**Osaka (JP)**

(72) Inventor: **Oohara, Sadahiro**
**2-13,1-chome Arinodai**
**Kitaku Kobe Hyogoken (JP)**
Inventor: **Umino, Naotake**
**1962 3 Oono Ichikawa**
**Chibaken (JP)**

(74) Representative: **Bayliss, Geoffrey Cyril et al,**
**BOULT, WADE & TENNANT 27 Furnival Street**
**London EC4A 1PQ (GB)**

Courier Press, Leamington Spa, England.

## Apparatus for producing dry ice from liquid carbon dioxide

This invention relates to a machine of producing brick-shaped dry ice from liquid carbon dioxide. More particularly, the invention relates to a machine of producing brick-shaped dry ice, the machine being so constructed as to be installed at the dry ice users' shops, such as restaurants, ice-cream shops, confectioners', thereby enabling the dry ice users to make dry ice by themselves.

A typical machine for producing dry ice, pellets is disclosed in U.S. Patent No. 3,708,993. This prior art machine is for producing rod-like pellets of dry ice from liquid carbon dioxide, wherein the rod-like pellets have a high density and ability to easily break into minute pieces. The machine is designed exclusively for dry ice manufacturers, who produce dry ice pellets at their factories and sell them to the users. The users break the rod-like pellets at their shops, and use them in minute pieces. The machine employs a relatively long cylindrical casing in which, after having been changed into snow by adiabatic expansion, the carbon dioxide is compressed into a rod shape. As a matter of course, the machine is large-sized, and stands high. On the other hand, the potential users' shops are pressed for space and usually do not have sufficient space for installing a large-sized machine at their shops only for producing dry ice pellets. As a result, they are obliged to buy dry ice pellets from the manufacturers. However, this is not economical, and sometimes causes inconvenience because of the shortage of pellets. At least the end users are constantly in fear of a possible shortage of pellets.

According to GB-A-433018 dry ice is formed in an upper cylinder and, under the control of a shutter valve, is allowed to fall into a lower cylinder, when the shutter valve of the lower cylinder is closed, the dry ice formed in the lower cylinder is consolidated by a ram after which the lower cylinder can be retracted to leave the consolidated block of dry ice exposed at the top of the cylinder to be removed.

The present invention is directed toward solving the problems and disadvantages encountered by the prior art machine, and has for its principal object to provide an improved dry ice producing machine of a compact size permitting the machine to be installed at the users' shops, thereby eliminating the necessity for buying dry ice pellets from the manufacturers. Another object of the present invention is to provide an improved machine of producing brick-shaped flat dry ice, thereby facilitating to store the dry ice for subsequent use. Other objects and advantages of the present invention will be obvious to one skilled in the art from the following description and accompanying drawings.

According to the present invention, the machine extending mould (4) having means (5, 6, 7, 19) to produce dry ice from liquid carbon dioxide and a press (1) reciprocatable therein to consolidate the dry ice therein having a vertically acting hydraulic cylinder/ram (2, 2b) connected thereto for operating the press and an opening (12) at the lower end of the mould for delivery of consolidated dry ice therefrom, characterised in that a horizontally acting slidable shutter (13) operated by a hydraulic cylinder/ram (18, 18b) and receiving means (15) are provided below the opening (12) at the lower end of the mould arranged for receiving the product falling from the mould when the mould is opened by the shutter (13), the receiving means extending to one side of the mould and in that the shutter (13) is formed with a downwardly projecting end plate (17) arranged to sweep over the receiving means (15) so that when the shutter (13) is moved to close the opening (12) of the mould after discharge of product from the mould, the end plate (17) displaces the product on the receiving means (15) from below the mould to one side of the mould.

The following is a description of a specific embodiment of the invention, reference being made to the accompanying drawings in which:

Figure 1 is a front vertical cross-section through a machine embodying the present invention;

Figure 2 is a side vertical cross-section through the machine in Figure 1; and

Figure 3 is a perspective view of the machine in Figures 1 and 2, particularly showing the inside structure.

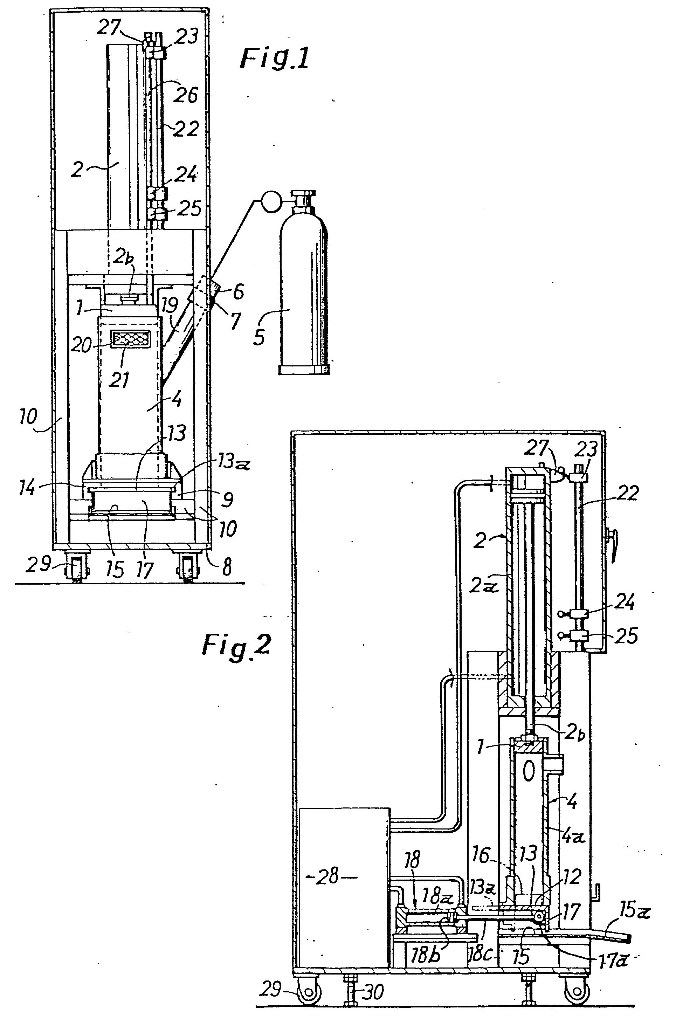

Referring particularly to Figure 2, the machine has a hydraulic drive unit 2 in its central section for driving a press 1, the drive unit including a hydraulic cylinder 2a and a ram 2b. The press 1 is forced into a rectangular mold 4 including a molding chamber 4a. Liquid carbon dioxide is supplied into the molding chamber 4a from a tank 5 via a reducing valve 6. The liquid carbon dioxide expands adiabatically in a filling nozzle 7 to form a snow-like material, and the snow is introduced into the molding chamber 4a, in which it is solidified into a brick-shaped dry ice 16 under compression.

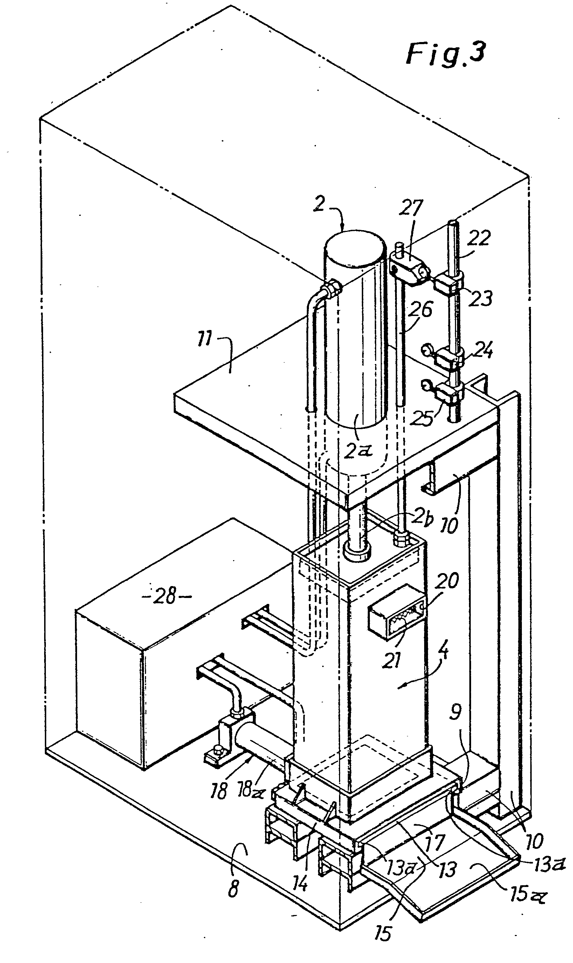

The machine includes a wheeled base plate 8 and a framework 10 mounted thereon. The drive unit 2 and the mold 4 are located in the front section of the machine as illustrated in Figure 2. The mold 4 is secured at its bottom to the framework 10 through a tray 9, which is secured to the base plate 8 as best illustrated in Figure 3. The hydraulic cylinder 2a is secured at its lower part to an intermediate support 11, which is secured to the framework 10.

The molding chamber 4a has no bottom and has an opening 12 through which the dry ice 16 is allowed to fall onto a receiver 15. During the molding operation, the opening 12 is closed by a slidable shutter 13, which is made of a thick rigid material capable of withstanding a high load provided by the press 1. the slidable shutter 13 can move along a pair of guide grooves 14 produced in the tray 9, and opposite edges 13a of the shutter 13 are freely slidable in the guide grooves 14. The receiver 15 is located under the opening 12 for allowing the dry ice 16 to securely rest on. In the illustrated embodiment the receiver 15 is made of a horizontally flat plate, but the dry ice resting thereon is likely to float due to the filling gas and move around thereon. In order to prevent it so doing, it is preferred that the receiver 15 rises slightly toward one end thereof where a chute 15a is formed which is inclined downwardly from the receiver 15. Thus the dry ice is enabled to smoothly slip down.

The dry ice 16 on the receiver 15 is pushed away by an end plate 17 secured to the undersurface of the shutter 13 when the shutter is closed. The shutter is operated by a hydraulic drive unit 18 including a hydraulic cylinder 18a and a piston 18b. The piston 18b is connected by a piston rod 18c to the end plate 17, thereby securing their unitary movement. As shown by the broken lines in Figure 2, when the piston 18b is advanced, the shutter 13 is equally advanced to close the opening 12, and when the piston 18b is retracted, the shutter is equally retracted to open the opening 12. The end plate 17 can be connected to the piston rod 18c by a suitable connector, such as a flange 17a on the end plate/shutter, to secure the unitary movement between the shutter and the piston.

The mold 4 is provided with a duct 19 at its upper section, the duct being diagonally supported as illustrated in Figure 1, and connected to the filling nozzle 7. As described hereinbefore, the filling nozzle communicates with the tank 5 via the reducing valve 6. Under this arrangement a liquid carbon dioxide is supplied into the molding chamber 4a in a snowy state. Reference numeral 20 indicates an outlet for permitting gaseous carbon dioxide to drain therefrom, wherein the outlet is provided with a metal grid for preventing the carbon dioxide snow in the molding chamber from exiting therefrom.

The intermediate support 11 is provided with a post 22 erected thereon for holding limit switches 23, 24 and 25. The press 1 is provided with a rod 26 on which an actuator 27 is fitted for actuating the individual limit switches 23, 24 and 25 during the up and down movement of the press 1. The limit switch 23 sets the upper limit at which the rising of the press 1 is stopped; the limit switch 24 sets the position at which the press 1 finishes its compressing operation, and the limit switch 25 sets the lower limit at which the press 1 finishes its pushing the dry ice 16 out of the molding chamber 4a. The limit switches 23, 24 and 25 control the hydraulic flows in a hydraulic pump unit 28 located in the rear section of the machine, wherein the hydraulic pump unit includes a pump, an oil tank, an electric motor, and a switching valve. The hydraulic drive units 2 and 18 are operated by the same hydraulic pump unit.

The base plate 8 is provided with wheels 29 whereby the machine can be readily transported, and once its location has been decided, the machine is locked by means of bolts 30.

Because of the provision of the horizontally sliding shutter 13, the height of the machine as a whole may be reduced to not higher than 1.8 metres. As a result, the following advantageous effects have been obtained:

1. By virtue of the reduced height the machine can be readily carried in the dry ice users' shops as it stands. The height of 1.8 metres is passable through normal shop doorways;

2. The machine is lower than the ceilings of users' shops, and it can be installed at any desired place;

3. The machine is stable with the low-situated center of gravity, thereby allowing the machine to be installed at a relatively small location site;

4. Because of a simplified and compact construction, the production costs have been reduced.

## Claims

1. An apparatus for producing dry ice from liquid carbon dioxide, comprising a vertically extending mould (4) having means (5, 6, 7, 19) to produce carbon dioxide-snow from liquid carbon dioxide and a press (1) reciprocatable therein to consolidate the carbon dioxid-snow therein having a vertically acting hydraulic cylinder/ram (2, 2b) connected thereto for operating the press and an opening (12) at the lower end of the mould for delivery of consolidated dry ice therefrom, characterised in that a horizontally acting slidable shutter (13) operated by a hydraulic cylinder/ram (18, 18b) and receiving means (15) are provided below the opening (12) at the lower end of the mould said receiving means arranged for receiving the product falling from the mould when the mould is opened by the shutter (13), the receiving means extending to one side of the mould and in that the shutter (13) is formed with a downwardly projecting end plate (17) arranged to sweep over the receiving means (15) so that when the shutter (13) is moved to close the opening (12) of the mould after discharge of product from the mould, the end plate (17) displaces the product on the receiving means (15) from below the mould to one side of the mould.

2. An apparatus as claimed in claim 1 characterised in that the ram (18b) of said second hydraulic cylinder (18) is connected to said end plate (17).

3. An apparatus as claimed in claim 1 or claim 2 characterised in that the product receiving means (15) comprises a flat surface extending laterally from the underside of the mould (4) to one side thereof and terminates in a downwardly extending chute (15a), the flat surface of the product receiving means (15) rising slightly towards the end thereof from which the chute extends downwardly.

4. An apparatus as claimed in either claim 1 or claim 2, characterised in that a hydraulic pump unit (28) is provided for driving said first and second hydraulic cylinders.

**Revendications**

1. Un appareil pour la production de glace sèche à partir de dioxyde de carbone liquide, comprenant un moule vertical (4) ayant des moyens (5, 6, 7, 19) pour produire de la neige de dioxyde de carbone à partir de dioxyde de carbone liquide et une presse alternative (1) disposée dans le moule pour compacter la neige de dioxyde de carbone et pourvue d'un ensemble cylindre/piston hydraulique (2, 2b) vertical d'actionnement, ainsi que d'une ouverture (12) disposée à la partie inférieure du moule pour délivrer la glace sèche compactée, caractérisé en ce qu'on prévoit un obturateur (13) coulissant horizontalement sous l'action d'un ensemble cylindre/piston hydraulique (18, 18b) et des moyens de réception (15) disposés en dessous de l'ouverture (12) à l'extrémité inférieure du moule, lesdits moyens de réception étant agencés pour recevoir le produit tombant du moule lorsque l'obturateur (13) est en position ouverte, les moyens de réception s'étendant en direction d'un côté du moule et en ce que l'obturateur (13) comporte une plaque d'extrémité (17) en saillie vers le bas agencée pour balayer les moyens de réception (15) de façon que lorsque l'obturateur (13) est déplacé pour fermer l'ouverture (12) du moule après décharge du produit, la plaque d'extrémité (17) déplace le produit sur les moyens de réception (15) depuis le dessous du moule jusque vers un côté du moule.

2. Un appareil selon la revendication 1, caractérisé en ce que le piston (18b) dudit second cylindre hydraulique (18) est relié à ladite plaque d'extrémité (17).

3. Un appareil selon la revendication 1 ou la revendication 2, caractérisé en ce que les moyens (15) de réception du produit comportent une surface plane s'étendant latéralement depuis le dessous du moule (4) jusqu'à un côté de celui-ci et se terminent en une glissière (15a) tournée vers le bas, la surface plane des moyens (15) de réception du produit s'élevant légèrement en direction de l'extrémité ceux-ci qui est prolongée par ladite glissière dirigée vers le bas.

4. Un appareil selon l'une ou l'autre des revendications 1 ou 2, caractérisé en ce qu'une pompe hydraulique (28) est prévue pour actionner lesdits premier et second cylindres hydrauliques.

**Patentansprüche**

1. Vorrichtung zur Herstellung von Trockeneis aus flüssigem Kohlendioxid, welche eine sich vertikal erstreckende Form (4) mit einer Einrichtung (5, 6, 7, 19) zur Herstellung von Kohlendioxidschnee aus flüssigem Kohlendioxid, einen in der Form (4) hin und her bewegbaren Preßstempel (1) zur Verfestigung des Kohlendioxidschnees mit einer damit verbundenen, vertikal arbeitenden hydraulischen Kolben/Zylindereinheit (2, 2b) zur Betätigung des Preßstempels (1) und eine Öffnung (12) am unteren Ende der Form zur Abgabe des verfestigten Trockeneises aus der Form umfaßt, dadurch gekennzeichnet, daß am unteren Ende der Form ein durch eine hydraulische Kolben/Zylindereinheit (18, 18b) betätigter horizontal wirkender gleitbarer Verschluß (13) und eine Auffangeinrichtung (15) vorgesehen sind, daß mittels der Auffangeinrichtung (15) das bei Öffnung der Form durch den Verschluß (13) aus der Form herabfallende Produkt auffangbar ist, daß die Auffangeinrichtung (15) sich nach einer Seite der Form hin erstreckt und daß der Verschluß (13) mit einer sich nach unten erstreckenden, über die Auffangeinrichtung (15) hinweggehenden Endplatte (17) versehen ist, so daß bei einer Bewegung des Verschlusses (13) nach der Abgabe des Produktes aus der Form im Sinne eines Schließens der Öffnung (12) der Form die Endplatte (17) das Produkt auf der Auffangeinrichtung (15) von unterhalb der Form nach einer Seite der Form verschiebt.

2. Vorrichtung nach Anspruch 1, dadurch gekennzeichnet, daß die Kolbenstange (18b) des zweiten hydraulischen Zylinders (18) mit der Endplatte (17) verbunden ist.

3. Vorrichtung nach Anspruch 1 oder 2, dadurch gekennzeichnet, daß die Auffangeinrichtung (15) eine flache Oberfläche umfaßt, die sich von der Unterseite der Form (4) nach einer Seite hin erstreckt und in einer nach unten verlaufenden Rutsche (15a) endet, und daß die flache Oberfläche der Auffangeinrichtung (15) für das Produkt gegen das Ende hin, von welchem aus sich die Rutsche (15a) nach unten erstreckt, leicht ansteigt.

4. Vorrichtung nach Anspruch 1 oder 2, dadurch gekennzeichnet, daß zum Antrieb der ersten und zweiten hydraulischen Zylinder eine hydraulische Pumpeneinheit (28) vorgesehen ist.

Fig.1

Fig.2

*Fig.3*